# EUROPEAN PATENT SPECIFICATION

(11) **EP 3 167 103 B1**
(45) Date of publication and mention of the grant of the patent: **27.05.2026**
(21) Application number: 14828626.3
(22) Date of filing: 23.12.2014
(51) Int. Cl.: D03D 11/02, D06C 7/02

(54) **THREE DIMENSIONAL FABRIC**
DREIDIMENSIONALER STOFF
TISSU EN TROIS DIMENSIONS

(30) Priority: 08.07.2014 US 201462021822 P
(43) Date of publication of application: 17.05.2017
(73) Proprietor: Avery Dennison Retail Information Services LLC, Mentor, OH 44060 (US)
(72) Inventor: DE BACKER, Mathieu, 63066 Grottammare (IT)
(74) Representative: HGF
(86) International application number: PCT/US2014/072104
(87) International publication number: WO 2016/007195

(56) References cited:
- EP-A2- 1 752 569
- DE-U1- 202012 100 837
- GB-A- 851 192
- JP-A- 2002 038 354
- US-A- 2 401 830
- US-A- 3 359 610
- US-A- 3 553 066
- US-A1- 2009 023 352
- US-A1- 2010 248 574

## Description

### CROSS-REFERENCE TO RELATED APPLICATION

The present application claims priority from U.S Provisional Application No. 62/021,822 filed July 8, 2014.

### BACKGROUND

The present invention relates generally to a woven tubular fabric created by novel weaving techniques. More particularly, the present disclosure relates to a three dimensional woven tubular fabric for garments and other items that provides a performance-enhancing stretch function.

Fabrics are typically made from corresponding raw materials and are constructed by weaving, knitting, plaiting or braiding. For example, felt fabrics are produced by the interlocking of fibers. Fabrics are primarily classified into woven fabrics, knitted fabrics, felt fabrics, plaited fabrics, non-woven fabrics, laminated fabrics and molded fabrics by standard production methods thereof.

In a narrow sense, woven fabrics refer to fabrics constructed by interlacing vertical warp threads with horizontal weft threads at right angles. Woven fabrics are the most widely used fabrics for under wears and outer wears. Knitted fabrics are constructed by making sets of threads into loops and combining the loops with one another in forward, backward, left and right directions. Knitted fabrics are rapidly produced by knitting and tend to be loose and elastic when being worn. Strands of fibers are Interlocked by heat, moisture, pressure or striking to construct felt fabrics, thus eliminating the need for the use of threads. In plaited, braided and lace fabrics, individual threads are interlaced with sets of threads while sliding in any one direction to attain desired effects.

Non-woven fabrics are constructed by the application of adhesive materials, the attachment of fibers through chemical functions on the surface of the fibers, or the attachment of webs or sheets of thermoplastic fibers by heating. Laminated fabrics are constructed by laminating a foam to one or two woven fabrics to achieve improved flexibility and provide a cushiony feeling. The surface areas of molded fabrics are larger than those of the raw materials before extrusion. Molded articles (e.g., clothes) are cushiony, or are in the form of a pile or plate.

All of these fabrics are very wearable, match the functions of the human body, and are not readily deformed. Additionally, sewing and other fusion techniques are currently used to impart three dimensional shapes to fabrics. However, typically sewing and other fusion techniques currently used to impart three dimensional shapes to fabrics results in loss of the stretch function and other performance characteristics. JP2002038354 A discloses a woven fabric that is obtained by heat cutting a broad woven fabric on first and second heat-cut lines and extending in the warp yarn direction and the weft yarn direction.
US 3553066 A discloses a matelassé, upholstery fabric and a method of producing an improved fabric of this type having superior design appearance and physical characteristics.
US 2009/0023352 A1 discloses Fabric structures having two connection segments and an expansion segment between the two connection segments. The fabric structure includes ground yarns that form a sheath, binder yarns, elongation yarns surrounded by the sheath, and lateral yarns. In the expansion segment, at least some of the lateral yarns are interwoven with the elongation yarns to connect the elongation yarns laterally with the sheath. Heat treatment of the expansion segment shrinks the length of the elongation yarns during manufacture. The sheath does not substantially shrink from the heat treatment relative to the elongation yarns and gathers together in an accordion-like arrangement. A tensile load applied to the fabric structure stretches the elongation yarns and unfolds the gathered sheath. The high strength sheath supports the tensile load when completely unfolded, while the elongation yarns absorbs energy as the fabric structure stretches or elongates.
US 3359610 A is directed at a multi-ply, three-dimensional fabric manufactured by attaching the plies together with elastically developable yarns in such a manner that the segments of attachment in adjacent yarns of the outer plies are in opposing relationship, so that, upon shrinkage of the elastically developable yarns to the interior of the fabric, the segments of attachment are pulled out of the plane of the unattached yarns, to produce puckered effects in the outer plies of said fabric.

In an attempt to overcome the above problems, a three dimensional fabric according to claim 1 has been created that comprises a face layer, and a back layer, woven together via floating threads. The face layer and the back layer are woven together to create predetermined patterns or areas where the two layers are not woven together. Thus, the floating threads comprise the threads connected to the stitched face layer and the stitched back layer in an alternating and repeating pattern. Specifically, the weaving is controlled by a computer program that will weave or not weave the two layers together. These areas which are not woven together create tubes. Once the weaving is complete, the three dimensional weave fabric material is heat treated. The heat treating process shrinks the floating threads, causing manipulation of the tube. Specifically, the tube puffs or stands up more than if there was no heat treatment. Thus, the novel weaving technique along with the heat treating process allows for an enhanced stretch function.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

The subject matter disclosed and claimed herein, in one aspect thereof, comprises a three dimensional weave fabric material for use in producing garments and other items. The three dimensional weave fabric material comprises two layers of material, a face layer and a back layer. Typically, the face layer and the back layer are manufactured of synthetic material, or synthetic blends, such as polyester, but any other suitable material can be used as is known in the art. The face layer and the back layer are then woven together via floating threads. The face layer and the back layer are woven together to create predetermined patterns or areas where the two layers are not woven together. These areas which are not woven together create tubes. Specifically, the weaving is controlled by a computer program that will weave or not weave the two layers together.

Once the weaving is complete, the three dimensional weave fabric material is heat treated. The heat treating process shrinks the floating threads, causing manipulation of the tube. Specifically, the tube puffs or stands up more than if there was no heat treatment. Additionally, the tubes can be filled with fibers or other suitable materials as is known in the art to make the puffed areas more firm, or to add texture or other similar features. Furthermore, the patterns and/or designs can be woven over the entire area of the garment, or just in limited areas on the garment, depending on the needs and wants of a user as well as manufacturing constraints. There can be a plurality of the same pattern and/or design, or a mixture of patterns and/or designs. The different size and/or shape of the patterns and/or designs are created by varying the size of the tube that is woven.

To the accomplishment of the foregoing and related ends, certain illustrative aspects of the disclosed innovation are described herein in connection with the following description and the annexed drawings. Other advantages and novel features will become apparent from the following detailed description when considered in conjunction with the drawings.

### BRIEF DESCRIPTION OF THE DRAWINGS

FIG. 1A illustrates a side sectional view of the three dimensional weave fabric material before heat treating in accordance with the disclosed architecture;
FIG. 1B illustrates a side section view of the three dimensional weave fabric material after heat treating in accordance with the disclosed architecture;
FIG. 2 illustrates a perspective view of the face layer and the back layer of the three dimensional weave fabric material in accordance with the disclosed architecture;
FIG. 3 illustrates a perspective view of the three dimensional weave fabric material in use as a woman's top in accordance with the disclosed architecture; and
FIG. 4 illustrates a perspective view of the three dimensional weave fabric material in use as a coat in accordance with the disclosed architecture.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

Sewing and other fusion techniques are currently used to impart three dimensional shapes to fabrics. However, typically sewing and other fusion techniques currently used to impart three dimensional shapes to fabrics results in loss of the stretch function and other performance characteristics. In an attempt to overcome the above problems, a three dimensional weave fabric material is disclosed for use in producing garments and other items. The three dimensional weave fabric material comprises two layers of material, a face layer and a back layer. The face layer and the back layer are then woven together via floating threads to create predetermined patterns or areas where the two layers are not woven together. These areas which are not woven together create tubes. Specifically, the weaving is controlled by a computer program that will weave or not weave the two layers together. Once the weaving is complete, the three dimensional weave fabric material is heat treated. The heat treating process shrinks the floating threads, causing manipulation of the tube. Specifically, the tube puffs or stands up more than if there was no heat treatment. Additionally, the tubes can be filled with fibers or other suitable materials to make the puffed areas more firm.

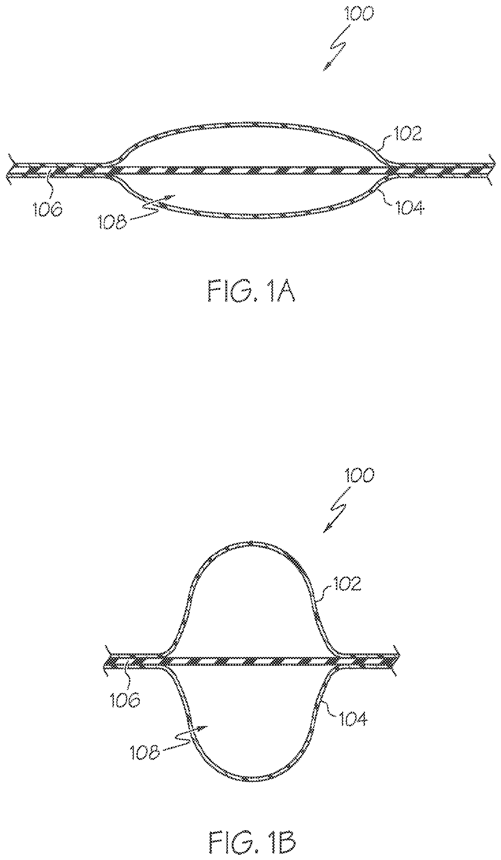

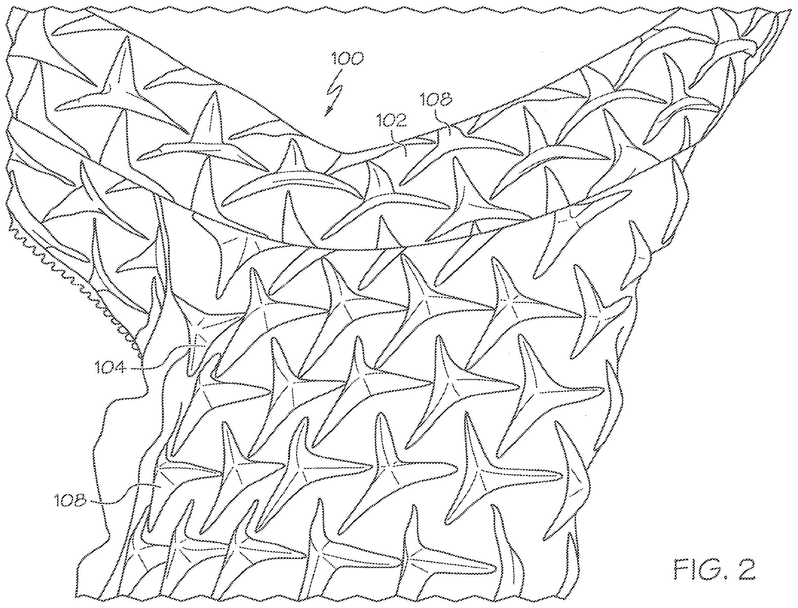

Referring initially to the drawings, FIGS. 1A-B and 2 illustrates a three dimensional weave fabric material 100 for use in producing garments and other items. Using the three dimensional weave fabric for producing garments is merely one possible example and the same fabric material may be used for any suitable application. Thus, although the term "fabric" is used throughout the present disclosure for exemplary purposes, the term "fabric" may be any single item or material, or a group of items or material.

The three dimensional weave fabric material 100 comprises two layers of material, a face (or surface) layer 102 and a back layer 104 (as shown in FIG. 2). Typically, the face layer 102 and the back layer 104 are manufactured of synthetic material, or synthetic blends, such as polyester, but any other suitable material can be used as is known in the art without affecting the overall concept of the invention. The face layer 102 and the back layer 104 can be any suitable shape and size depending on the needs and wants of a user, as well as manufacturing constraints.

The face layer 102 and the back layer 104 are then woven together via threads 106. The threads 106 are preferably floating lycra threads but can be any other suitable material as is known in the art. For example, the threads 106 used may be monofilament yarns, multifilament yarns, spun yarns, etc. as desired, and these threads 106 can be made from artificial, natural or synthetic fibers depending on the user's needs or wants, and/or manufacturing constraints. The threads 106 may also be elastic or non-elastic yarn, or various combinations thereof. The type of threads 106 weaving the face layer 102 and the back layer 104 together throughout the body of the fabric material 100 and the number of yarns may be varied over wide ranges and will be primarily controlled by the desired end use for the fabric material 100. Typically, the threads 106 have a denier of from 70 to 900 and preferably between 70 and 500 denier, wherein 1 denier equals 1 gram per 9000 meters.

The face layer 102 and the back layer 104 are woven together to create predetermined patterns or areas where the two layers 102 and 104 are not woven together. These areas which are not woven together create tubes (or gaps or pockets) 108. Specifically, the weaving is controlled by a computer program that will weave or not weave the two layers 102 and 104 together. Typically, the three dimensional fabric material 100 is produced on customized or purpose-built weaving machines, which incorporate a computer program to control the action of the threads 106.

Accordingly, the face layer 102 includes sequential unstitched surface portions and sequential stitched surface portions formed in an alternating and repeating pattern. For example, standard weaving will continue row after row. Then, when a tube or gap 108 is to be formed, the floating threads 106 are pushed into the two layers 102 and 104 (similar to a sewing machine), and then the weaving or sewing stops and resumes when enough space has been created for a gap or tube 108 to form. Specifically, the warp (or longitudinal threads of the weave) are split in order to create this gap or tube 108. This process is then repeated row after row until all the weaving is done.

Once the weaving is complete (as shown in FIG. 1A), the three dimensional weave fabric material 100 is then heat treated. The three dimensional weave fabric material 100 can be heat treated via any suitable heat treating process as is known in the art. The heat treating process shrinks the floating threads 106, causing manipulation of the tube or gap 108. Specifically, the tube or gap 108 puffs or stands up more than if there was no heat treatment (as shown in FIG. 1B). Using synthetic material or synthetic blends for layers 102 and 104 allows the heat treating to shrink the synthetic material so as to create the puffed areas. The bigger surface area there is on the material, the more puffing can be created by the heat treatment. Typically, the puffed design extends into both layers of the three dimensional weave fabric material 100, creating the three dimensional design. However, as in the claimed invention, the puffed design is manipulated so that it is more exaggerated on one side or layer than the other side or layer. Additionally, the tubes or gaps 108 can be filled with fibers or other suitable materials as is known in the art to make the puffed areas more firm, or to add texture or other similar features.

Thus, the three dimensional weave fabric material 100 can be any suitable size, shape, and pattern as is known in the art without affecting the overall concept of the invention. One of ordinary skill in the art will appreciate that the size and/or shape of the face layer 102 and the back layer 104 as shown in FIGS. 1A and 1B is for illustrative purposes only and many other sizes and/or shapes of the layers 102 and 104 are well within the scope of the present disclosure. Although dimensions of the layers 102 and 104 (i.e., length, width, and height) are important design parameters for good performance, the layers 102 and 104 may be any size and/or shape that ensures an optimal stretch function and other performance characteristics.

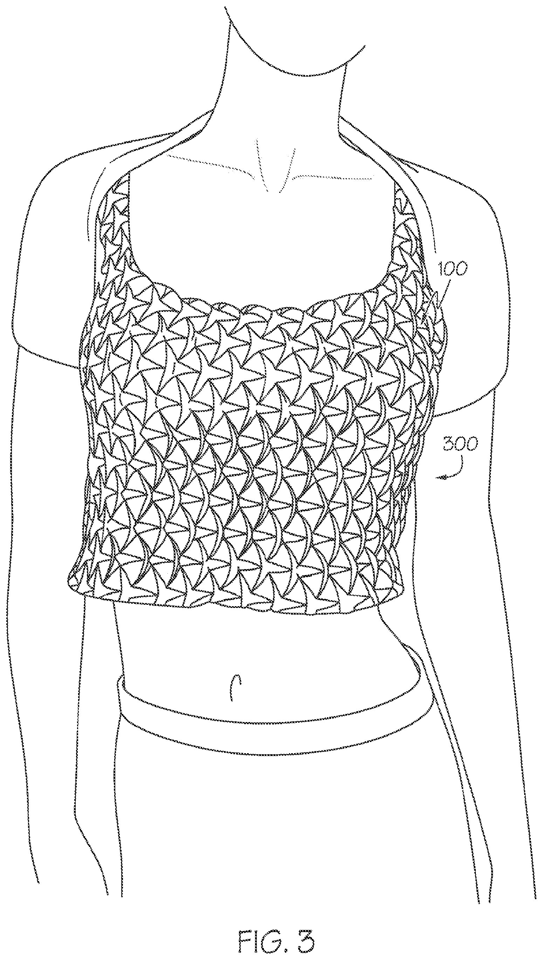

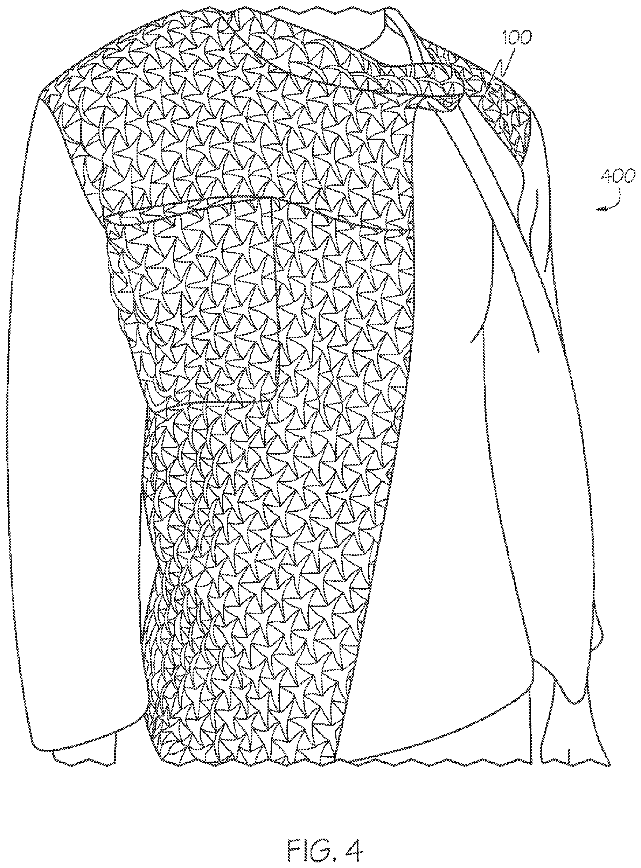

FIGS. 3-4 illustrate the three dimensional weave fabric material 100 in use. For example, FIG. 3 illustrates a woman's top 300 and FIG. 4 illustrates a jacket 400. The patterns and/or designs can be woven over the entire area of the garment, such as with the jacket 400 (shown in FIG. 4), or the woman's top 300 (shown in FIG. 3), or just in limited areas on the garment, depending on the needs and wants of a user as well as manufacturing constraints. Any pattern and/or design can be woven and the pattern and/or design can be of any shape or size. There can be a plurality of the same pattern and/or design, or a mixture of patterns and/or designs. Large patterns and/or designs can be utilized or small patterns and/or designs, or combinations of both large and small patterns and/or designs can be utilized. According to the claimed invention, the different size and/or shape of the patterns and/or designs are created by varying the size of the tube or gap that is woven. Any size and/or shaped garment can be created with the pattern and/or design. Further, the patterns and/or designs can be used in woven labels, such as those labels found on the interior of a garment to help with branding.

A specific mode of practicing the invention is given by the following example:

### EXAMPLE

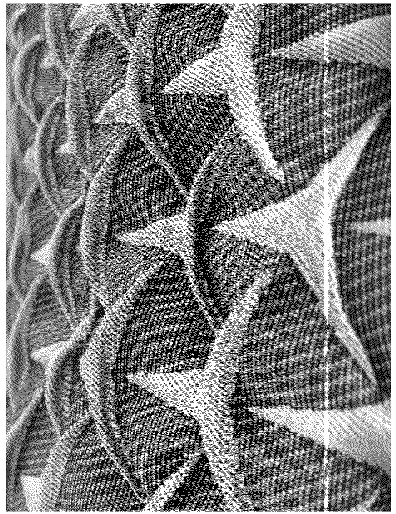

In this particular example a first layer and second layer are superimposed on one another and then by weaving certain sections of the layers together, and leaving other areas unsecured a pattern can be produced but subsequently heat treating the fabric such that the unwoven areas "puff" or rise up over the surface of the fabric to create tactile areas representing a particular pattern. It should be understood that any sort of pattern can be created, e.g. letters, numbers, geometric shapes, logos, brands, etc.

What has been described above includes examples of the claimed subject matter. It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A three dimensional weave fabric material (100) for garments, comprising:
a face layer (102); and
a back layer (104);
wherein the face layer (102) is woven to the back layer (104) via a plurality of floating threads (106) to create a predetermined pattern; and
wherein the predetermined pattern comprises tubes (108) that are areas where the face layer (102) and the back (104) layer are not woven together;
wherein the three dimensional weave fabric material (100) is heat treated causing shrinking of the floating threads (106) and the tubes (108) to puff;
**characterized in that**
the three dimensional weave fabric material includes patterns having different size and/or shape obtained by the variation of the size of the tubes, and
the puffed tubes (108) are configured such that the puffing is more exaggerated on the face layer (102) than the back layer (104), or
the puffed tubes (108) are configured such that the puffing is more exaggerated on the back layer (104) than the face layer (102).

2. The three dimensional weave fabric (100) of claim 1, wherein the tubes (108) are filled with fibers to add texture.

3. A garment (300, 400) produced using the three dimensional weave fabric (100) of claim 1.

4. The garment (300, 400) of claim 3, wherein the predetermined pattern is configured to be woven over an entire area of the garment (300, 400) or over a limited area of the garment (300, 400).

5. The garment (300, 400) of claim 3, wherein the three dimensional weave fabric (100) of claim 1 is utilized in a woven label on an interior of the garment (300, 400) and wherein the tubes (108) are filled with fibers to add texture.

6. The garment (300, 400) of claim 3, further comprising a mixture of more than one predetermined pattern on an entire area of the garment (300, 400).

## Patentansprüche

1. Dreidimensionales Webstoffmaterial (100) für Kleidungsstücke, umfassend:
eine Außenlage (102); und
eine Abseitenlage (104);
wobei die Außenlage (102) über eine Vielzahl von schwimmenden Fäden (106) mit der Abseitenlage (104) verwebt ist, um ein vorbestimmtes Muster zu erzeugen; und
wobei das vorbestimmte Muster Schläuche (108) umfasst, die Bereiche sind, in denen die Außenlage (102) und die Abseitenlage (104) nicht miteinander verwebt sind;
wobei das dreidimensionale Webstoffmaterial (100) wärmebehandelt wird, wodurch ein Schrumpfen der schwimmenden Fäden (106) und der Schläuche (108) verursacht wird, um aufzublasen;
**dadurch gekennzeichnet, dass**
das dreidimensionale Webstoffmaterial Muster mit unterschiedlicher Größe und/oder Form beinhaltet, die durch die Variation der Größe der Schläuche erhalten werden, und
die aufgeblasenen Schläuche (108) derart konfiguriert sind, dass das Aufblasen auf der Außenlage (102) stärker übertrieben ist als auf der Abseitenlage (104), oder
die aufgeblasenen Schläuche (108) derart konfiguriert sind, dass das Aufblasen auf der Abseitenlage (104) stärker übertrieben ist als auf der Außenlage (102).

2. Dreidimensionaler Webstoff (100) nach Anspruch 1, wobei die Schläuche (108) mit Fasern gefüllt sind, um Struktur hinzuzufügen.

3. Kleidungsstück (300, 400), hergestellt unter Verwendung des dreidimensionalen Webstoffs (100) nach Anspruch 1.

4. Kleidungsstück (300, 400) nach Anspruch 3, wobei das vorbestimmte Muster dazu konfiguriert ist, über einen gesamten Bereich des Kleidungsstücks (300, 400) oder über einen begrenzten Bereich des Kleidungsstücks (300, 400) gewebt zu sein.

5. Kleidungsstück (300, 400) nach Anspruch 3, wobei der dreidimensionale Webstoff (100) nach Anspruch 1 in einem gewebten Etikett auf einer Innenseite des Kleidungsstücks (300, 400) verwendet wird und wobei die Schläuche (108) mit Fasern gefüllt sind, um Struktur hinzuzufügen.

6. Kleidungsstück (300, 400) nach Anspruch 3, ferner umfassend eine Mischung aus mehr als einem vorbestimmten Muster auf einer gesamten Fläche des Kleidungsstücks (300, 400).

## Revendications

1. Matériau de tissu à tissage en trois dimensions (100) pour des vêtements, comprenant :
une couche de face (102) ; et
une couche de dos (104) ;
dans lequel la couche de face (102) est tissée à la couche de dos (104) par l'intermédiaire d'une pluralité de fils flottants (106) pour créer un motif prédéterminé ; et
dans lequel le motif prédéterminé comprend des tubes (108) qui sont des zones où la couche de face (102) et la couche de dos (104) ne sont pas tissées ensemble ;
dans lequel le matériau de tissu à tissage en trois dimensions (100) est traité thermiquement provoquant le rétrécissement des fils flottants (106) et le gonflement des tubes (108) ;
**caractérisé en ce que** le matériau de tissu à tissage en trois dimensions comprend des motifs de taille et/ou de forme différentes obtenus par variation de la taille des tubes, et
les tubes gonflés (108) sont configurés de telle sorte que le gonflement soit plus exagéré sur la couche de face (102) que sur la couche de dos (104), ou
les tubes gonflés (108) sont configurés de telle sorte que le gonflement soit plus exagéré sur la couche de dos (104) que sur la couche de face (102).

2. Tissu à tissage en trois dimensions (100) selon la revendication 1, dans lequel les tubes (108) sont remplis de fibres pour ajouter de la texture.

3. Vêtement (300, 400) produit en utilisant le tissu à tissage en trois dimensions (100) selon la revendication 1.

4. Vêtement (300, 400) selon la revendication 3, dans lequel le motif prédéterminé est configuré pour être tissé sur une zone entière du vêtement (300, 400) ou sur une zone limitée du vêtement (300, 400).

5. Vêtement (300, 400) selon la revendication 3, dans lequel le tissu à tissage en trois dimensions (100) selon la revendication 1 est utilisé dans une étiquette tissée à l'intérieur du vêtement (300, 400) et dans lequel les tubes (108) sont remplis de fibres pour ajouter de la texture.

6. Vêtement (300, 400) selon la revendication 3, comprenant en outre un mélange de plus d'un motif prédéterminé sur une zone entière du vêtement (300, 400).
